# EUROPEAN PATENT SPECIFICATION

(11) **EP 1 793 725 B1**
(45) Date of publication and mention of the grant of the patent: **18.04.2012**
(21) Application number: 04790075.8
(22) Date of filing: 01.10.2004
(51) Int. Cl.: D06F 39/02, A23C 7/02, A47L 15/44, A47L 15/00

(54) **SOLID DETERGENT DISPENSER AND USE OF SUCH DISPENSER**
SPENDER VOM FESTEN WASCHMITTEL UND VERWENDUNG DES SPENDERS
DISTRIBUTEUR DE DÉTERGENT SOLIDE ET MISE EN OEUVRE DUDIT DISTRIBUTEUR

(43) Date of publication of application: 13.06.2007
(73) Proprietor: ECOLAB INC., St. Paul, MN 55102-2233 (US)
(72) Inventor: HELMINGER, Karl, 83404 Ainring (DE); GRUNWALD, Ludger, 42349 Wuppertal (DE); HOLZNER, Ralph, 83313 Siegsdorf (DE); SAUTER, Joachim, 41542 Dormagen-Nievenheim (DE); SCHUSTER, Ralf, 83313 Siegsdorf (DE); WURM, Herbert, 83313 Siegsdorf (DE)
(74) Representative: Gesthuysen, von Rohr & Eggert
(86) International application number: PCT/EP2004/010955
(87) International publication number: WO 2006/037354

(56) References cited:
- DE-A1- 3 510 831
- US-A- 4 020 865
- US-A- 4 845 965
- US-A- 5 137 694
- US-B1- 6 418 958

## Description

This invention relates to a detergent dispenser for dosing of a pre-determined quantity of a solid detergent according to the preamble of claim 1 and to a use of such dispenser according to claim 13 for cleaning and/or disinfecting a milking equipment.

Dosing of a pre-determined quantity of a detergent from a detergent reservoir to achieve a specific detergent solution is a widely accepted praxis. The present invention relates to dosing of a pre-determined quantity of a solid detergent. Solid within the scope of the present invention means bulk material like powder or granulate material as well as solid block-like material which may be produced by pressing of a powder or by casting or other manufacturing methods. However, solid detergent within the scope of the present application as well means semi-solid material like gel with high viscosity which will not flow from the solid detergent reservoir on its own motion but only if pre-dissolved in part by a rinsing liquid.

The term "detergent" in the present application means any kind of cleaning product for washing, rinsing, dish washing, laundry washing, as well as for cleaning soiled equipment. The term detergent further covers disinfectants used for all kinds of applications.

Rinsing liquid within the scope of the present invention means any liquid able to dissolve a specific solid detergent to achieve a detergent solution. In particular, however, rinsing liquid means water.

The invention relates in particular to the field of milking equipment, system, or parlour as a specifically interesting field of use of such method.

Where a solid detergent from a solid detergent reservoir shall be used to form a detergent solution, the prior art forming the starting point of the invention

(US 5,549,875A, EP 0 229 038 A2; similar detergent dispensers with two feed bowls for different solid chemicals can be obtained also from US 4,845,965 A, US 6,418,958 B1) proposes an automatic dispenser for dispensing solid chemicals used in a cleaning process. This prior art gives an overview of the background of automatic dispensing of a solid detergent from a solid detergent reservoir and of dispensing of detergents in general. This prior art defines two basic categories based upon their method of controlling the amount of detergent dispensed, namely time controlled dispensers, and conductivity measurement dispensers.

The prior art mentioned above proposes a conductivity measurement dispenser for a solid detergent. This detergent dispenser comprises a solid detergent reservoir, a supply line for supplying water as rinsing liquid to the solid detergent reservoir, and a rinsing liquid dispensing means in the form of a water spray nozzle system below the solid detergent in the solid detergent reservoir and connected to the supply line, so that water can be sprayed toward the solid detergent to dissolve some of it to form the solution. A solution conduit is mounted below the solid detergent reservoir and is collecting detergent solution dripping off the solid detergent block or powder container and carries the detergent solution away from this reservoir towards the utilization point which in this embodiment is a washing machine. A conductivity sensing means as well as a temperature sensing means is operatively connected to the solution conduit to measure on the one hand the conductivity of the detergent solution flowing in the conduit, on the other hand its temperature. Both measuring means are connected to an electronic control means that controls the operation of the detergent dispenser in total.

A flow regulating means is cooperatively connected to the water supply line for maintaining a constant flow rate of the water. The electronic control means calculates the total amount of detergent dispensed into the utilization point based upon the defined constant water flow rate, the length of the measuring period and the measured conductivity of the detergent solution. In a modified mode of operation a number of dispensing periods is provided and the total amount of detergent dispensed into the utilization point is calculated by summing the periodic amounts thereof.

Altogether, in this prior art system the quantity (e.g. in grams) of a solid detergent transferred to the utilization point in the form of the detergent solution is measured.

This specific method and dispenser take into account the requirement of specific utilization systems, in particular a milking equipment which requires a specific total quantity of a specific detergent for a complete cleaning or disinfecting cycle. In an example that may be 200 g of a specific milking equipment disinfecting chemical measured into an inlet chamber of the milking equipment and sucked with a large amount of water through the milking equipment by the vacuum in the milking equipment or system.

In this regard reference is additionally made to prior art describing a milking equipment and specific problems in cleaning and disinfecting such equipment (US 5,345,890 A).

Further reference is made to WO 00/28879 A which relates to a method for detecting the quantity of a solid product dissolved in a solution flow of known flow rate and unknown or variable concentration. Such method can be used together with a detergent dispenser as disclosed in EP 0 229 038 A that forms the starting point of the invention.

The problem with the measurement of concentration by measurement of conductivity in a continuous flow of detergent solution is the questionable precision of the conductivity measurement. This is particularly true if the utilization point shows strong variations in back pressure, flow rate etc. as it is the case in a milking equipment, system, or parlour. In result overdosing of detergent in the detergent solution is the usual thing done by the end-user of such chemical product to be on the safe side.

An approach which promises higher accuracy and less overdosing is to use a mixing and storage tank for a ready-to-use detergent solution (US 4,463,582 A). This apparatus for supplying a dry detergent concentrate for a laundry plant uses a measuring probe within the detergent solution in the tank to check the concentration of detergent in the solution. This kind of method is used with a weighing system below the storage tank.

Within the last years truly solid detergents in particular in the form of a solid block are more frequently used. The advantage of a solid block of detergent is a small size and weight compared to a liquid product (for example 4 kg in a small block compared to a 201 container of ready to use detergent solution). The solid product is less dangerous in application, less dangerous when transported and much cheaper for transportation.

Nevertheless, there is still a substantial need for a detergent dispenser which allows dispensing a desired quantity (mass) of a solid detergent, however in the form of a detergent solution towards a utilization point with high precision and in a safe, simple and accurate way. In particular there is the need for a corresponding detergent dispenser which is particularly useful for a milking equipment, system or parlour taking into consideration the pressure variations and other system features of such specific equipment.

The present invention solves above mentioned problem by means of a detergent dispenser with the features of the preamble of claim 1 that is further specified by the features of the characterizing part of claim 1.

Preferred embodiments of the detergent dispenser according to the invention are the subject matter of dependent claims 2 to 12.

A preferred use of a detergent dispenser according to the invention for cleaning and/or disinfecting a milking equipment is the subject of claim 13.

The invention describes a detergent dispenser which is appropriate for metering a solid detergent rapidly and with high precision however without the necessity to have a conductivity measurement in a flowing detergent solution. The amount of solid detergent that in the end shall be metered towards the utilization point can be entered into the electronic control means as a mass quantity (e.g. in grams). This will be reached largely independent of the ambient conditions.

The rinsing rate with solid detergents depends on several ambient conditions, inter alia the temperature of the rinsing liquid, in particular the rinsing water, temperature of the solid detergent in the solid detergent reservoir, liquid pressure, specific solubility of the solid detergent, distance between spray nozzle for the rinsing liquid and the lowest level of the solid detergent reservoir, time interval between dosing cycles (re-solidification of the solid detergent), etc.

The detergent dispenser according to the invention allows wide variations of above mentioned conditions without any impairment of metering accuracy. In fact only the solid detergent that already has been dissolved and is present as detergent solution in the dissolving tank is determined by the calculation stored in the electronic control means. Whereas the overall amount of detergent solution that is transporting the pre-determined quantity of detergent may vary as a result of varying ambient conditions, the quantity of detergent as such is precisely defined.

In fact with the above mentioned example of 200 g of solid detergent the overall volume of detergent solution may e.g. vary between 3,51 and 6,01 depending on above mentioned ambient conditions. Normally this is not a problem for the following utilization point, in particular the equipment or system to be cleaned and/or disinfected, because the specific pre-determined quantity of detergent will there be diluted once more and to a much larger extent (e.g. up to 60 to 100 1). However, if a precise correction of different volumes of detergent solution should be required, a corresponding correction could be applied using a volume flow meter at the delivery outlet or downstream thereof.

Now, details of detergent dispenser according to the invention will be explained following a detailed description of a preferred embodiment of the invention with reference to the drawings. In the drawings the first figure shows a schematic display of a detergent dispenser with two solid detergent reservoirs.

A method for dosing of a pre-determined quantity of a solid detergent from a solid detergent reservoir by dissolving some of the solid detergent in the reservoir in a rinsing liquid to form a detergent solution, comprises the following steps:
a) continuously or discontinuously feeding detergent solution generated at the detergent reservoir into a dissolving tank,
b) measuring the amount of rinsing liquid supplied to form the detergent solution that is fed to the dissolving tank, as well as any amount of rinsing liquid directly supplied to the dissolving tank,
c) measuring the detergent concentration of the detergent solution in the dissolving tank,
d) calculating the quantity of detergent in the detergent solution in the dissolving tank by multiplication of the results of the measurements in steps b) and c),
e) feeding the amount of detergent solution representing the required quantity of detergent from the dissolving tank to a utilization point, in particular an equipment or system to be cleaned and/or disinfected.

This method has the advantages already explained in the introductory parts of the description.

In a further step it may be provided that the feeding of detergent solution into the dissolving tank is terminated when calculation in step d) has reached the pre-determined quantity of detergent. Following this termination of feeding the detergent solution in the dissolving tank is ready to be fed to the utilization point, namely the equipment or system that is to be cleaned and/or disinfected. However, such utilization point may be a dishwashing machine, a laundry washing machine or the like as well.

Although of course some kind of level supervision in the dissolving tank is necessary for safety reasons, the volume of detergent solutions in the dissolving tank is not what is measured as the essential characteristics. Of course, the supply of rinsing liquid to the dissolving tank is measured, but with the aim to determine the quantity of solid detergent now contained in the detergent solution in the dissolving tank.

In a further specification of the method, measuring the detergent concentration in the dissolving tank is done by measuring the conductivity of the detergent solution within the tank. However, as conductivity is widely temperature-dependent it is advisable that in addition to measuring the concentration, the temperature of the detergent solution in the tank or a related temperature is measured.

The way to calculate the quantity of solid detergent in the detergent solution in the dissolving tank may vary widely. However, in practise it has been realized that a particularly preferable method step is that the calculation of the quantity of detergent in the detergent solution is done based on a table look-up procedure, preferably of a three-dimensional data table system for conductivity, concentration and temperature.

A typical flow chart for this kind of calculation is disclosed in the second figure of the drawings with the following terms used:
χ*_{ref}* = conductivity @ reference - temperature
χ*_{T}* = conductivity @ actual temperature
α(i) = Temperaturecoefficient(s) of detergent solution
*T* = actual temperature
*T_{ref}* = reference - temperature
*y* = calculated detergent concentration value
*value* = calculated χ*_{ref}*
*x(i)*, *y(i)* = table look up values

As a safety measure it can be provided that an upper level for the detergent concentration in the dissolving tank is not exceeded, preferably by additionally supplying rinsing liquid to the dissolving tank.

Concentration measurement can be an indicator for consumption of solid detergent in the solid detergent reservoir. The remaining product level in the solid detergent reservoir can be indirectly monitored by continuous observation of the ratio between the supplied quantity of rinsing liquid, in particular water, and the conductivity representing the concentration of detergent.

As the reservoir empties the conductivity will drop and may trigger an alarm. The gradient of the conductivity variation depends on the quantity of rinsing liquid in the dissolving tank. This quantity will be taken into account. So altogether an excessive drop in the concentration measured in step c) is interpreted as information that the solid detergent reservoir is empty.

As already explained above, preferably tap water, in particular hot tap water, is used as a rinsing liquid.

Further, as equally explained above, the solid detergent may be provided as a cast powder in a powder bag, as a granulate in a corresponding container or even as a semi-solid detergent, namely a gel with high viscosity, preferably in a suitable container as well.

In the embodiment described here, however, the solid detergent is provided as a solid block, optionally in a suitable container.

The method applied for dissolving solid detergent from the solid detergent reservoir is well known from the prior art in EP 0 229 038 A2 or in US 5,549,875 A. In this method rinsing liquid is sprayed towards the solid detergent reservoir impinging upon substantially the entire lower surface area of the reservoir. Detergent solution is dripping off the lower surface of the solid detergent in the reservoir and is collected for further feeding to the dissolving tank.

The detergent solution may be gravity-fed from the dissolving tank to the utilization point. However, in a preferred embodiment of the method feeding from the tank to the utilization point, in particular to the system to be cleaned is done by a delivery pump.

Normally, the detergent solution in the dissolving tank will not be very stable. So continuous movement in the detergent solution is advisable. Preferably, it is provided that, while the preparation of the detergent solution in the dissolving tank is under way, the detergent solution in the dissolving tank is circulated within the dissolving tank or through a circulation conduit. In a very preferred embodiment circulation of the detergent solution is done by the delivery pump as well in a circulation mode thereof.

The diagrammatic display in the first figure of the drawings shows that here two solid detergent reservoirs are provided both feeding the dissolving tank. This is related to an optional method where different solid detergents from different solid detergent reservoirs are fed to the dissolving tank in alternate or successive system-feeding cycles. As an alternative to this method or in addition thereto is may be provided that different, preferably incrementally increasing quantities of solid detergent are pre-determined and fed to the utilization point in successive feeding cycles.

Finally, as already explained above, a preferred field of application for the method is for cleaning and/or disinfecting a milking equipment, system or parlour.

Of course, the method may be adapted to different rinsing circumstances and properties. It might be useful to end feeding of rinsing liquid to the solid detergent reservoir somewhat in advance of the final point where the pre-determined quantity of solid detergent is reached. So residual quantities can be taken into account. With a sufficiently intelligent logic in the electronic control means a self-learning system may be applied.

Along with an explanation of the first figure of the drawings the inventive detergent expenser will be explained hereafter.

The first figure shows a detergent dispenser for dosing of a predetermined quantity of a solid detergent. This dispenser comprises at least one solid detergent reservoir 1, in the present embodiment two of those 1a, 1b and a third one indicated in dashed lines as an option 1c. A supply line 2 for supplying a rinsing liquid 3 to the solid detergent reservoir 1 is provided with branches 2a, 2b and, optionally, 2c. A rinsing liquid dispensing means 4 in the form of a spray nozzle is positioned below the solid detergent 5 in the solid detergent reservoir 1 and is connected to the supply line 2 or the respective supply line branch 2a, 2b, 2c respectively. It is intended to dispense rinsing liquid 3 as indicated towards the solid detergent 5 to dissolve some of the solid detergent 5 in the solid detergent reservoir 1.

A solution conduit 6 is connected to the solid detergent reservoir 1 to carry detergent solution 7 away from the solid detergent reservoir 1. This will be explained later.

A concentration measuring means 8 is positioned downstream of the solution conduit 6 and is adapted to measure the concentration of the detergent solution 7 or a physical characteristic of the detergent solution 7 enabling calculation of its concentration.

Finally, an electronic control means 9 for controlling the operation of the detergent dispenser is provided wherein the measuring means 8 is connected to this control means 9.

The control means 9 has a central processing unit 9a, an input amplyfier 9b for amplification of the measuring signal of the measuring means 8, and an in/out-interface 9c for all incoming and outgoing connecting lines to different parts, measuring means and control means of the dispenser.

A rinsing liquid flow meter 10 is provided at the supply line 2. This is adapted to measure the amount of rinsing liquid supplied to form the detergent solution 7. This flow meter 10 is connected to the electronic control means 9.

As already explained above the rinsing liquid 3 may be any liquid adapted to a specific solid detergent 5. However, usually water will be the rinsing liquid so that hereafter the term water will be used instead of rinsing liquid from time to time.

A dissolving tank 11 is provided to hold a substantial amount of detergent solution 7, and the solution conduit 6 is opening into this dissolving tank 11. In fact, the solution conduits 6a, 6b and, optionally, 6c equally lead into the dissolving tank 11.

The concentration measuring means 8 is operatively connected to the dissolving tank 11 and adapted to measure the concentration of the detergent solution 7 held in the dissolving tank 11.

The electronic control means 9 is adapted to calculate the quantity of detergent in the detergent solution 7 in the dissolving tank 11 by multiplication of the results of the measurement of the amount of rinsing liquid 3 supplied as well as the detergent concentration measured by the concentration measuring means 8.

The dissolving tank 11 is provided with a delivery outlet 12 which may be shut off for holding the detergent solution 7 in the dissolving tank 11 and opened for delivery of detergent solution 7 from the dissolving tank 11 to a utilization point 13, preferably to a system or equipment that has to be cleaned and/or disinfected. As already explained above such utilization point may equally be a dishwashing machine, a laundry washing machine or other cleaning equipment.

From the delivery outlet 12 a delivery conduit 14 leads to the utilization point 13 which sometimes may be positioned quite distant from the detergent dispenser itself.

In the preferred embodiment of the invention the supply line 2 is provided with a preferably motorized shut off valve 15 assigned to the rinsing liquid dispensing means 4. Further the supply line 2 is provided with a backflow preventer 16, preferably positioned downstream of the shut off valve 15. In all cases we have indications a, b, c for the three different solid detergent reservoirs 1 present in the embodiment of the drawings.

According to a further preferred embodiment of the invention it is provided that the concentration measuring means 8 is designed as a conductivity measuring means. As the conductivity is usually temperature-dependent it is advisable that a temperature measuring means is operatively connected to the dissolving tank 11 and is - here - connected to the electronic control means 9 as well. In the present embodiment the temperature measuring means is integrated into the concentration measuring means 8.

As already explained above, in the detergent dispenser according to the invention it is preferred that the calculation of the quantity of detergent in the detergent solution 7 by means of the electronic control means 9 is done based on a table look-up procedure, preferably of a three-dimensional data table system for conductivity, concentration and temperature. This allows to take care of the typical behaviour of conductivity following temperature and concentration of a solid detergent in a rinsing liquid like water. This takes care of the nonlinear relationship between the three parameters.

Further it is provided that an upper level for the detergent concentration in the dissolving tank 11 is not exceeded, preferably by additionally supplying rinsing liquid to the dissolving tank 11. In a further preferred embodiment it is provided that the electronic control means 9 is adapted to emit an "empty" signal if an excessive drop in the concentration measured by the concentration measuring means 8 indicates that the solid detergent reservoir-1 is empty. As already explained the rinsing liquid 3 is usually water from a water tap, preferably hot water.

In the embodiment shown it is provided that the rinsing liquid supply line 2 (or a separate supply line is directly connected to the dissolving tank 11, preferably by means of a motorized shut off valve 17 connected to the electronic control means 9. This separate supply of rinsing liquid 3, namely water into the dissolving tank 11 guarantees that a maximum detergent concentration in the dissolving tank 11 is not exceeded. Fresh water may be directly introduced into the tank 11 to avoid saturation effects which impair measurement accuracy. Further, this direct introduction of water into the tank 11 allows for cleaning and rinsing of the tank 11 as such.

The first figure shows that in this specific embodiment the solid detergent reservoir 1 comprises a housing with a solid detergent compartment, at the top containing the solid detergent 5 and the rinsing liquid dispensing means 4 and a solution collector below this solid detergent compartment so that for dissolving of solid detergent 5 from the solid detergent reservoir 1 rinsing liquid 3 may be sprayed towards the solid detergent 5 in the solid detergent reservoir 1 impinging upon substantially the entire lower surface area of solid detergent 5 in the reservoir 1.

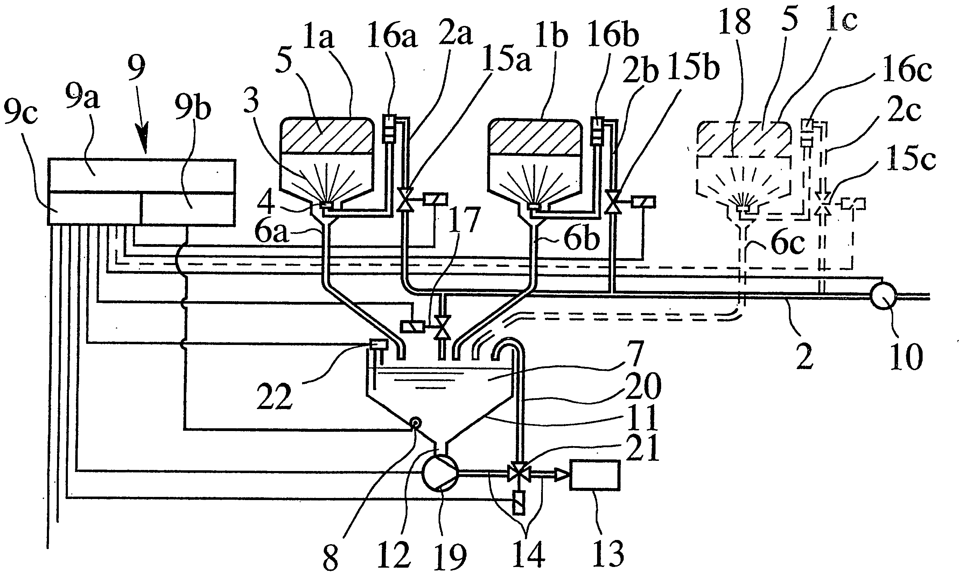

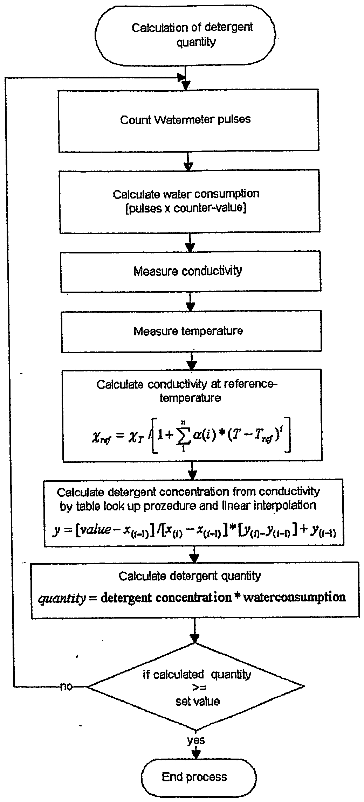

However, the drawing in dashed lines shows a modification or option where the solid detergent reservoir 1 comprises a bottom plate 18 with perforations or the like with the solid detergent 5 stored above the bottom plate 18. This system may be in particular used with a semi-solid detergent like a gel of high viscosity. This system is similar to a system disclosed in WO 92/20876 A. It depends on viscosity and other characteristics of the semi-solid detergent 5 how the solution with spraying water towards the bottom plate 18 will work.

Further details of the construction are related to the fact that the delivery outlet 12 of the dissolving tank 11 is provided with a delivery pump 19, that the dissolving tank 11 is provided with a mixing means for mixing and circulating the detergent solution 7, and that the dissolving tank 11 is provided with an external circulation conduit 20 extending from the delivery outlet 12 back to the top of the dissolving tank 11. For this specific construction a three-way valve 21 is provided downstream of the delivery outlet 12 and - here - downstream of the delivery pump 19, connecting the delivery outlet 12 to either the delivery conduit 14 or the circulation conduit 20. During circulation and preparation of the fmal detergent solution 7 with the pre-determined overall amount of detergent available circulation is done through the circulation conduit 20. At the end of this phase the three way valve 21 is operated by the electronic control means 9 to close the conduit 20 and to open the delivery conduit 14 towards the utilization point 13.

Of course the liquid level in the tank 11 must be controlled. To this end the dispenser is provided with a level gauge 22 which here is adapted to measure different levels of liquid in the tank 11.

As explained above in the present embodiment it is provided that the dispenser is provided with more than one solid detergent reservoir 1 for dosing different detergents or a larger amount of detergent. This may be used to provide that one solid detergent reservoir 1 is provided with an alkaline solid detergent and a second solid detergent reservoir 1 is provided with an acidic detergent. In the electronic control means 9 the flushing ratio or succession may be pre-set. The electronic control means 9 may be designed to predetermine different, preferably incrementally increasing quantities of solid detergent 5 to be fed to the utilization point in successive feeding cycles.

As equally explained above this dispenser may be used for a milking equipment, system or parlour with particular advantages.

In general the metering process may be started either manually or automatically. However, it is advisable that the dissolving tank 11 is briefly flushed before with hot water to increase rinsing water temperature and to remove residues from previous cleaning processes.

## Claims

1. Detergent dispenser for dosing of a pre-determined quantity of a solid detergent (5), comprising
at least one solid detergent reservoir (1),
a supply line (2) for supplying a rinsing liquid (3) to the solid detergent reservoir (1),
a rinsing liquid dispensing means (4) connected to the supply line (2) at the solid detergent reservoir (1) for dispensing rinsing liquid (3) towards the solid detergent (5) to dissolve some of the solid detergent (5) in the solid detergent reservoir (1),
a solution conduit (6) connected to the solid detergent reservoir (1) to carry detergent solution (7) away from the solid detergent reservoir (1),
a concentration measuring means (8) downstream of the solution conduit (6) adapted to measure the concentration of the detergent solution (7) or a physical characteristic of the detergent solution (7) that enables calculation of its concentration,
an electronic control means (9) for controlling the operation of the detergent dispenser, the measuring means (8) connected to this control means (9) **characterized in that**
a rinsing liquid flow meter (10) is provided at the supply line (2) adapted to measure the amount of rinsing liquid supplied to form the detergent solution (7), and is connected to the electronic control means (9),
a dissolving tank (11) is provided to hold a substantial amount of detergent solution (7), and the solution conduit (6) is leading to the dissolving tank (11), the concentration measuring means (8) is operatively connected to the dissolving tank (11) and adapted to measure the concentration of the detergent solution (7) held in the dissolving tank (11),
the electronic control means (9) is adapted to calculate the quantity of detergent in the detergent solution (7) in the dissolving tank (11) by multiplication of the results of the measurement of the amount of rinsing liquid (3) supplied and the detergent concentration of the detergent solution (7),
the dissolving tank (11) is provided with a delivery outlet (12) which may be opened for delivery of detergent solution (7) to a utilization point, preferably to an equipment or system to be cleaned and/or disinfected.

2. Dispenser according to claim 1, **characterized in that**
the supply line (2) is provided with a preferably motorized shut off valve (15) assigned to the rinsing liquid dispensing means (4).

3. Dispenser according to any one of the preceding claims, **characterized in that**
the supply line (2) is provided with a backflow preventer (16), preferably positioned downstream of the shut off valve (15), and/or
the concentration measuring means (8) is designed as a conductivity measuring means.

4. Dispenser according to any one of the preceding claims, **characterized in that**
a temperature measuring means is operatively connected to the dissolving tank (11) and is, preferably, connected to the electronic control means (9) as well, wherein, preferably, the temperature measuring means is integrated into the concentration measuring means (8).

5. Dispenser according to any one of the preceding claims, **characterized in that** the calculation of the quantity of detergent in the detergent solution (7) by means of the electronic control means (9) is done based on a table look-up procedure, preferably of a three-dimensional data table system for conductivity, concentration and temperature, and/or
an upper level for the detergent concentration in the dissolving tank (11) is not exceeded, preferably by additionally supplying rinsing liquid to the dissolving tank (11), and/or
the electronic control means (9) is adapted to emit an "empty" signal if an excessive drop in the concentration measured by the concentration measuring means (8) indicates that the solid detergent reservoir (1) is empty.

6. Dispenser according to any one of the preceding claims, **characterized in that** the supply line (2) is connected to a water supply or water tap, preferably for hot water, and/or
the supply line (2) or a separate rinsing liquid supply line is directly connected to the dissolving tank (11), preferably by means of a motorized shut off valve (17) connected to the electronic control means (9).

7. Dispenser according to any one of the preceding claims, **characterized in that** the solid detergent reservoir (1) comprises a housing with a solid detergent compartment at the top containing the solid detergent (5) and the rinsing liquid dispensing means (4) and a solution collector below this solid detergent compartment so that for dissolving of solid detergent (5) from the solid detergent reservoir (1) rinsing liquid (3) may be sprayed towards the solid detergent (5) in the solid detergent reservoir (1) impinging upon substantially the entire lower surface area of the reservoir (1), and/or
the solid detergent reservoir (1) comprises a bottom plate (18) with perforations or the like with the solid detergent (5) stored above the bottom plate (18).

8. Dispenser according to any one of the preceding claims, **characterized in that** the delivery outlet (12) of the dissolving tank (11) is provided with a delivery pump (19), and/or
the dissolving tank (11) is provided with a mixing means for mixing and circulating the detergent solution (7), wherein, preferably, the dissolving tank (11) is provided with an external circulation conduit (20) extending from the delivery outlet (12) back to the top of the dissolving tank (11).

9. Dispenser according to any one of the preceding claims, **characterized in that** a three way valve (21) is provided downstream of the delivery outlet (12) and preferably, downstream of the delivery pump (19), connecting the delivery outlet (12) to a delivery conduit (14) or the circulation conduit (20).

10. Dispenser according to any one of the preceding claims, **characterized in that** the delivery tank (11) is provided with a level gauge (22), preferably adapted to measure different levels of liquid in the tank (11), wherein, preferably, the level gauge (22) is connected to the electronic control means (9).

11. Dispenser according to any one of the preceding claims, **characterized in that** the dispenser is provided with more than one solid detergent reservoir (1) for dosing different detergents or a larger amount of detergent,
wherein, preferably,
one solid detergent reservoir (1) is provided with an alkaline solid detergent and a second solid detergent reservoir (1) is provided with an acidic detergent.

12. Dispenser according to any one of the preceding claims, **characterized in that** in the electronic control means (9) the flushing ratio or succession may be pre-set, and/or
the electronic control means (9) is designed to predetermine different, preferably incrementally increasing quantities of solid detergent (5) to be fed to the utilization point in successive feeding cycles.

13. Use of a detergent dispenser according to any one of the preceding claims for cleaning and/or disinfecting a milking equipment.

## Patentansprüche

1. Waschmittelabgabevorrichtung zum Dosieren einer vorgegebenen Menge eines festen Waschmittels (5), die Folgendes umfasst:
wenigstens einen Vorratsbehälter (1) für ein festes Waschmittel,
eine Zufuhrleitung (2) zum Zuführen einer Spülflüssigkeit (3) zu dem Vorratsbehälter (1) für ein festes Waschmittel,
Spülflüssigkeitsabgabemittel (4), die an dem Vorratsbehälter (1) für ein festes Waschmittel mit der Zufuhrleitung (2) verbunden sind, um eine Spülflüssigkeit (3) an das feste Waschmittel (5) abzugeben, um in dem Vorratsbehälter (1) für ein festes Waschmittel einen Teil des festen Waschmittels (5) aufzulösen,
eine Lösungsleitung (6), die mit dem Vorratsbehälter (1) für ein festes Waschmittel verbunden ist, um eine Waschmittellösung (7) von dem Vorratsbehälter (1) für ein festes Waschmittel weg zu transportieren,
Konzentrationsmessmittel (8) stromabseitig von der Lösungsleitung (6), die dazu ausgelegt sind, die Konzentration der Waschmittellösung (7) oder eine physikalische Kenngröße der Waschmittellösung (7), die eine Berechnung ihrer Konzentration ermöglicht, zu messen,
elektronische Steuerungsmittel (9) zum Steuern des Betriebs der Waschmittelabgabevorrichtung, wobei die Messmittel (8) mit diesen Steuerungsmitteln (9) verbunden sind,
**dadurch gekennzeichnet, dass**
eine Spülflüssigkeitsströmungsmesseinrichtung (10) an der Zufuhrleitung (2) vorgesehen ist, die dazu ausgelegt ist, die Menge der Spülflüssigkeit zu messen, die zugeführt wird, um die Waschmittellösung (7) zu bilden, und mit den elektronischen Steuerungsmitteln (9) verbunden ist,
ein Auflösungsbehälter (11) vorgesehen ist, um eine erhebliche Menge der Waschmittellösung (7) zu halten, wobei die Lösungsleitung (6) zu dem Auflösungsbehälter (11) führt,
die Konzentrationsmessmittel (8) mit dem Auflösungsbehälter (11) betriebsfähig verbunden sind und dazu ausgelegt sind, die Konzentration der Waschmittellösung (7), die in dem Auflösungsbehälter (11) gehalten wird, zu messen,
die elektronischen Steuerungsmittel (9) dazu ausgelegt sind, die Menge des Waschmittels in der Waschmittellösung (7) in dem Auflösungsbehälter (11) durch Multiplikation des Ergebnisses der Messung der Menge der zugeführten Spülflüssigkeit (3) mit der Waschmittelkonzentration der Waschmittellösung (7) zu berechnen,
der Auflösungsbehälter (11) mit einem Abgabeauslass (12) versehen ist, der für eine Abgabe der Waschmittellösung (7) an einer Verwendungsstelle, vorzugsweise an eine Ausrüstung oder ein System, das zu reinigen und/oder zu desinfizieren ist, geöffnet werden kann.

2. Abgabevorrichtung nach Anspruch 1, **dadurch gekennzeichnet, dass**
die Zufuhrleitung (2) mit einen vorzugsweise motorbetrieben Absperrventil (15) versehen ist, das den Spülflüssigkeitsabgabemitteln (4) zugeordnet ist.

3. Abgabevorrichtung nach einem der vorhergehenden Ansprüche, **dadurch gekennzeichnet, dass**
die Zufuhrleitung (2) mit einem Rückflussverhinderer (16), der vorzugsweise stromabseitig von dem Absperrventil (15) positioniert ist, versehen ist, und/oder die Konzentrationsmessmittel (8) als Leitfähigkeitsmessmittel entworfen sind.

4. Abgabevorrichtung nach einem der vorhergehenden Ansprüche, **dadurch gekennzeichnet, dass**
Temperaturmessmittel betriebsfähig mit dem Auflösungsbehälter (11) verbunden sind und vorzugsweise ebenfalls mit den elektronischen Steuerungsmitteln (9) verbunden sind, wobei die Temperaturmessmittel vorzugsweise in die Konzentrationsmessmittel (8) integriert sind.

5. Abgabevorrichtung nach einem der vorhergehenden Ansprüche, **dadurch gekennzeichnet, dass** die Berechnung der Menge des Waschmittels in der Waschmittellösung (7) mittels der elektronischen Steuerungsmittel (9) auf der Grundlage einer Nachschlagtabellenprozedur, vorzugsweise einem dreidimensionalen Datentabellensystem für Leitfähigkeit, Konzentration und Temperatur erfolgt und/oder
ein oberer Pegel für die Waschmittelkonzentration in dem Auflösungsbehälter (11) vorzugsweise durch zusätzliche Lieferung von Spülflüssigkeit zu dem Auflösungsbehälter (11) nicht überschritten wird und/oder
die elektronischen Steuerungsmittel (9) angepasst sind, ein "Leer"-Signal auszusenden, wenn ein übermäßiger Abfall bei der durch die Konzentrationsmessmittel (8) gemessenen Konzentration angibt, dass der Vorratsbehälter (1) für festes Waschmittel leer ist.

6. Abgabevorrichtung nach einem der vorhergehenden Ansprüche, **dadurch gekennzeichnet, dass** die Zufuhrleitung (2) mit einer Wasserzufuhreinrichtung oder einem Wasserhahn, vorzugsweise für heißes Wasser, verbunden ist und/oder
die Zufuhrleitung (2) oder eine separate Spülflüssigkeitszufuhrleitung vorzugsweise mittels eines motorbetriebenen Absperrventils (17), das mit den elektronischen Steuerungsmitteln (9) verbunden ist, direkt mit dem Auflösungsbehälter (11) verbunden ist.

7. Abgabevorrichtung nach einem der vorhergehenden Ansprüche, **dadurch gekennzeichnet, dass** der Vorratsbehälter (1) für ein festes Waschmittel ein Gehäuse mit einem Fach für ein festes Waschmittel, das oben das feste Waschmittel (5) und die Spülflüssigkeitsabgabemittel (4) und unter diesem Fach für ein festes Waschmittel eine Lösungssammeleinrichtung umfasst, so dass zum Lösen des festen Waschmittels (5) aus dem Vorratsbehälter (1) für ein festes Waschmittel eine Spülflüssigkeit (3) zu dem festen Waschmittel (5) in dem Vorratsbehälter (1) für ein festes Waschmittel hin gesprüht werden kann, das im Wesentlichen auf den gesamten unteren Oberflächenbereich des Vorratsbehälters (1) auftrifft, und/oder
der Vorratsbehälter (1) für ein festes Waschmittel eine Bodenplatte (18) mit Perforationen oder dergleichen umfasst, wobei das feste Waschmittel (5) über der Bodenplatte (18) aufbewahrt wird.

8. Abgabevorrichtung nach einem der vorhergehenden Ansprüche, **dadurch gekennzeichnet, dass** der Abgabeauslass (12) des Auflösungsbehälters (11) mit einer Abgabepumpe (19) versehen ist, und/oder
der Auflösungsbehälter (11) mit Mischungsmitteln zum Mischen und Zirkulieren der Waschmittellösung (7) versehen ist, wobei der Auflösungsbehälter (11) vorzugsweise mit einer externen Zirkulationsleitung (20) versehen ist, die von dem Abgabeauslass (12) zurück zur Oberseite des Auflösungsbehälter (11) verläuft.

9. Abgabevorrichtung nach einem der vorhergehenden Ansprüche, **dadurch gekennzeichnet, dass** ein Dreiwegeventil (21) stromabseitig von dem Abgabeauslass (12) und vorzugsweise stromabseitig von der Abgabepumpe (19) vorgesehen ist, die den Abgabeauslass (12) mit einer Abgabeleitung (14) oder mit der Zirkulationsleitung (20) verbindet.

10. Abgabevorrichtung nach einem der vorhergehenden Ansprüche, **dadurch gekennzeichnet, dass** der Lieferbehälter (11) mit einer Pegelmesseinrichtung (22) versehen ist, die vorzugsweise dazu ausgelegt ist, verschiedene Pegel der Flüssigkeit in dem Behälter (11) zu messen, wobei die Pegelmesseinrichtung (22) vorzugsweise mit den elektronischen Steuerungsmitteln (9) verbunden ist.

11. Abgabevorrichtung nach einem der vorhergehenden Ansprüche, **dadurch gekennzeichnet, dass** die Abgabevorrichtung mit mehr als einem Vorratsbehälter (1) für ein festes Waschmittel versehen ist, um unterschiedliche Waschmittel oder eine größere Menge des Waschmittels zu dosieren,
wobei vorzugsweise
ein Vorratsbehälter (1) für ein festes Waschmittel mit einem alkalischen festen Waschmittel versehen ist und ein zweiter Vorratsbehälter (1) für ein zweites Waschmittel mit einem sauren festen Waschmittel versehen ist.

12. Abgabevorrichtung nach einem der vorhergehenden Ansprüche, **dadurch gekennzeichnet, dass** in den elektronischen Steuerungsmitteln (9) das Ausschwemmverhältnis oder die Ausschwemmfolge im Voraus eingestellt werden kann, und/oder
die elektronischen Steuerungsmittel (9) so eingerichtet sind, dass unterschiedliche vorzugsweise stufenweise ansteigende Mengen des festen Waschmittels (5) zu dem Verwendungspunkt in aufeinander folgenden Zufuhrzyklen geleitet werden.

13. Verwendung einer Waschmittelabgabevorrichtung nach einem der vorhergehenden Ansprüche zum Reinigen und/oder Desinfizieren einer Melkausrüstung.

## Revendications

1. Distributeur de détergent pour doser une quantité prédéterminée d'un détergent solide (5), comprenant :
au moins un réservoir de détergent solide (1),
une ligne d'alimentation (2) pour alimenter un liquide de rinçage (3) au réservoir de détergent solide (1),
un moyen de distribution de liquide de rinçage (4) connecté à la ligne d'alimentation (2) au niveau du réservoir de détergent solide (1) en vue de distribuer du liquide de rinçage (3) vers le détergent solide (5) pour dissoudre une partie du détergent solide (5) dans le réservoir de détergent solide (1),
un conduit de solution (6) connecté au réservoir de détergent solide (1) pour extraire une solution de détergent (7) hors du réservoir de détergent solide (1),
un moyen de mesure de concentration (8) en aval du conduit de solution (6) adapté pour mesurer la concentration de la solution de détergent (7) ou
une caractéristique physique de la solution de détergent (7) qui permet le calcul de sa concentration,
un moyen de commande électronique (9) pour commander le fonctionnement du distributeur de détergent, le moyen de mesure (8) étant connecté à ce moyen de commande (9),
**caractérisé en ce**
**qu'**un débitmètre de liquide de rinçage (10) est prévu au niveau de la ligne d'alimentation (2),
lequel est adapté pour mesurer la quantité de liquide de rinçage fournie pour former la solution de détergent (7), et est connecté au moyen de commande électronique (9),
un réservoir de dissolution (11) est prévu pour retenir une quantité substantielle de solution de détergent (7), et le conduit de solution (5) conduit au réservoir de dissolution (11),
le moyen de mesure de concentration (8) est connecté fonctionnellement au réservoir de dissolution (11) et est adapté pour mesurer la concentration de la solution de détergent (7) contenue dans le réservoir de dissolution (11),
le moyen de commande électronique (9) est adapté pour calculer la quantité de détergent dans la solution de détergent (7) dans le réservoir de dissolution (11) en multipliant les résultats de la mesure de la quantité de liquide de rinçage (3) fourni et la concentration de détergent de la solution de détergent (7), et
le réservoir de dissolution (11) est pourvu d'une sortie de distribution (12) qui peut être ouverte pour distribuer la solution de détergent (7) à un point d'utilisation, de préférence à un équipement ou un système devant être nettoyé et/ou désinfecté.

2. Distributeur selon la revendication 1, **caractérisé en ce que**
la ligne d'alimentation (2) est pourvue d'une vanne d'arrêt de préférence motorisée (15) affectée au moyen de distribution de liquide de rinçage (4).

3. Distributeur selon l'une quelconque des revendications précédentes, **caractérisé en ce que** la ligne d'alimentation (2) est pourvue d'un dispositif antireflux (16), de préférence positionné en aval de la vanne d'arrêt (15), et/ou le moyen de mesure de concentration (8) est conçu sous forme de moyen de mesure de conductivité.

4. Distributeur selon l'une quelconque des revendications précédentes, **caractérisé en ce qu'**un moyen de mesure de température est connecté fonctionnellement au réservoir de dissolution (11) et est de préférence également connecté au moyen de commande électronique (9), et de préférence le moyen de mesure de température est intégré au moyen de mesure de concentration (8).

5. Distributeur selon l'une quelconque des revendications précédentes, **caractérisé en ce que** le calcul de la quantité de détergent dans la solution de détergent (7) à l'aide du moyen de commande électronique (9) s'effectue sur la base d'une procédure de consultation de tableau, de préférence un système de tableau de données tridimensionnel de conductivité, concentration et température, et/ou
un niveau supérieur de concentration de détergent dans le réservoir de dissolution (11) n'est pas dépassé, de préférence en fournissant en plus du liquide de rinçage au réservoir de dissolution (11), et/ou
le moyen de commande électronique (9) est adapté pour émettre un signal "vide" si une chute de concentration excessive mesurée par le moyen de mesure de concentration (8) indique que le réservoir de détergent solide (1) est vide.

6. Distributeur selon l'une quelconque des revendications précédentes, **caractérisé en ce que** la ligne d'alimentation (2) est connectée à un robinet d'alimentation d'eau ou un robinet d'eau, de préférence d'eau chaude, et/ou
la ligne d'alimentation (2) ou une ligne d'alimentation séparée de liquide de rinçage est connectée directement au réservoir de dissolution (11), de préférence au moyen d'une vanne d'arrêt motorisée (17) connectée au moyen de commande électronique (9).

7. Distributeur selon l'une quelconque des revendications précédentes, **caractérisé en ce que** le réservoir de détergent solide (1) comprend un boîtier avec un compartiment de détergent solide en haut, contenant le détergent solide (5) et le moyen de distribution de liquide de rinçage (4) et un collecteur de solution en dessous de ce compartiment de détergent solide de telle sorte que pour dissoudre du détergent solide (5) provenant du réservoir de détergent solide (1), du liquide de rinçage (3) puisse être pulvérisé vers le détergent solide (5) dans le réservoir de détergent solide (1), venant frapper substantiellement toute la superficie inférieure du réservoir (1), et/ou
le réservoir de détergent solide (1) comprend une plaque inférieure (18) avec des perforations ou similaires, le détergent solide (5) étant stocké au-dessus de la plaque inférieure (18).

8. Distributeur selon l'une quelconque des revendications précédentes, **caractérisé en ce que** la sortie de distribution (12) du réservoir de dissolution (11) est pourvue d'une pompe de distribution (19), et/ou
le réservoir de dissolution (11) est pourvu d'un moyen de mélange pour mélanger et faire circuler la solution de détergent (7), le réservoir de dissolution (11) étant de préférence pourvu d'un conduit de circulation externe (20) s'étendant depuis la sortie de distribution (12) et revenant au haut du réservoir de dissolution (11).

9. Distributeur selon l'une quelconque des revendications précédentes, **caractérisé en ce qu'**il est prévu une vanne à trois voies (21) en aval de la sortie de distribution (12) et de préférence en aval de la pompe de distribution (19), reliant la sortie de distribution (12) à un conduit de distribution (14) ou au conduit de circulation (20).

10. Distributeur selon l'une quelconque des revendications précédentes, **caractérisé en ce que** le réservoir de dissolution (11) est pourvu d'une jauge de niveau (22), de préférence adaptée pour mesurer différents niveaux de liquide dans le réservoir (11), la jauge de niveau (22) étant de préférence connectée au moyen de commande électronique (9).

11. Distributeur selon l'une quelconque des revendications précédentes, **caractérisé en ce que** le distributeur est pourvu de plus d'un réservoir de détergent solide (1) pour doser différents détergents ou une plus grande quantité de détergent,
un réservoir de détergent solide (1) étant de préférence pourvu d'un détergent solide alcalin et un deuxième réservoir de détergent solide (1) étant pourvu d'un détergent acide.

12. Distributeur selon l'une quelconque des revendications précédentes, **caractérisé en ce que** dans le moyen de commande électronique (9), le rapport de rinçage ou la succession de rinçage peuvent être préétablis, et/ou
le moyen de commande électronique (9) est conçu pour prédéterminer différentes quantités, de préférence augmentant par incréments, de détergent solide (5) devant être alimenté au point d'utilisation dans des cycles d'alimentation successifs.

13. Utilisation d'un distributeur de détergent selon l'une quelconque des revendications précédentes, pour nettoyer et/ou désinfecter un équipement de traite.
